# EUROPÄISCHE PATENTSCHRIFT

(11) **EP 0 913 294 B1**
(45) Veröffentlichungstag und Bekanntmachung des Hinweises auf die Patenterteilung: **04.08.2004**
(21) Anmeldenummer: 98120309.4
(22) Anmeldetag: 27.10.1998
(51) Int. Cl.: B60N 2/42, B60R 21/20

(54) **Sicherheitsvorrichtung für ein Kraftfahrzeug**
Safety device for automobiles
Dispositif de sécurité pour automobile

(30) Priorität: 30.10.1997 DE 19748026
(43) Veröffentlichungstag der Anmeldung: 06.05.1999
(73) Patentinhaber: TAKATA-PETRI (Ulm) GmbH, 89081 Ulm (DE)
(72) Erfinder: Kopetzky, Robert Dr., 89173 Lonsee (DE); Rasch, Georg, 85080 Geimersheim (DE); Wittmann, Robert, 89233 Neu-Ulm (DE); Vollmer, Elmar, 83236 Feldwies (DE); Scheef, Joachim, 85144 Buxheim (DE); Cakmak, Mehmet Dr., 85057 Ingolstadt (DE); Schöneburg, Rodolfo Dr., 86666 Burgheim (DE)
(74) Vertreter: Müller, Wolfram Hubertus, Dipl.-Phys.

(56) Entgegenhaltungen:
- EP-A- 0 470 413
- EP-A- 0 768 215
- DE-A- 4 426 090
- US-A- 5 607 180

## Beschreibung

Die vorliegende Erfindung betrifft eine neuartige Sicherheitsvorrichtung für ein Kraftfahrzeug, insbesondere zum Schutz des Fahrzeuginsassen bei einem Seitenaufprall.

Grundsätzlich sind Sicherheitsvorrichtungen bekannt, die einen Fahrzeuginsassen bei einem Seitenaufprall schützen. Hierbei bilden Seitenairbags ein Luftpolster zwischen dem Thorax- und/oder Kopfbereich des Fahrzeuginsassen, damit der Aufprall des Fahrzeuginsassen auf die Seitenwand des Fahrzeuges abgedämpft wird.

Es ist das der Erfindung zugrundeliegende Problem (Aufgabe), eine Sicherheitsvorrichtung für ein Kraftfahrzeug zu schaffen, welche die Verletzungen des Fahrzeuginsassen insbesondere im Torsobereich im Falle eines Seitenaufpralls stark herabsetzt.

Die Lösung dieser Aufgabe erfolgt durch die Merkmale des Anspruchs 1 und insbesondere dadurch, daß die Sicherheitsvorrichtung aus zumindest einem Koppelelement besteht das einen Luftsack und ein mechanisches Distanzelement oder mechanische Führung aufweist, das im Seitenbereich eines Fahrzeugsitzes vorgesehen ist und das bei einem Seitenaufprall in Richtung der Fahrzeugaußenseite bewegbar ist, um eine frühzeitige Kopplung zwischen einer eindringenden Struktur und dem Fahrzeugsitz zu schaffen.

Der vorliegenden Erfindung liegt der Gedanke zugrunde, daß eine möglichst frühzeitige Kopplung zwischen einer eindringenden Struktur, beispielsweise einem aufprallenden Fahrzeug, und dem Fahrzeugsitz vorteilhaft ist. Durch das erfindungsgemäß an der Seite des Fahrzeugsitzes vorgesehene Koppelelement erfolgt eine Kraftübertragung zwischen der eindringenden Struktur und dem Fahrzeugsitz nicht erst dann, wenn sich die eindringende Struktur bzw. die Seitenwand des Fahrzeuges an den Fahrzeugsitz angelegt hat. Vielmehr wird wesentlich früher eine Kraftübertragung erreicht, wobei bei beginnender Kraftübertragung noch ein Abstand zwischen der eindringenden Struktur und dem Fahrzeugsitz gewährleistet ist. Sobald die eindringende Struktur auf das Koppelelement Kraft überträgt, wird zusätzlich Energie dadurch dissipiert, daß der Fahrzeugsitz mit den darauf befindlichen Fahrzeuginsassen verformt bzw. verschoben werden muß.

Dokument EP 0470413 das als Stand der Technik betrachtet wird, beschreibt ein mechanisches Distanzelement als Sicherheitsvorrichtung.

Herkömmliche Seitenairbags eignen sich ohne besondere Vorkehrungen nicht als erfindungsgemäßes Koppelelement, da bei diesen keine Kraftübertragung zwischen der eindringenden Struktur und dem Fahrzeugsitz möglich ist, wie dies erfindungsgemäß jedoch der Fall ist.

Vorteilhafte Ausführungsformen der Erfindung sind in der Beschreibung, den Zeichnungen sowie den Unteransprüchen beschrieben.

Nach einer ersten vorteilhaften Ausführungsform kann das Koppelelement expandierbar sein. Ein wichtigerteil des Koppelelementes ist der Luftsack. Überraschenderweise hat sich nämlich herausgestellt, daß durch Expandieren eines Luftsacks bereits bei einem relativ niedrigen Innendruck von etwa 2 bar eine einwandfreie Kraftübertragung von der eindringenden Struktur auf den Fahrzeugsitz erfolgen kann, so daß dieser von der eindringenden Struktur verformt wird. Im Falle eines Unfalls wird der an den Fahrzeugsitz festgegurtete Fahrzeuginsasse zusammen mit dem Fahrzeugsitz bewegt, so daß bei einer Berührung zwischen der eindringenden Struktur und dem Insassen dessen Belastungen stark herabgesetzt sind und im Idealfall ein direkter Kontakt zwischen eindringender Struktur und dem Fahrzeuginsassen ausgeschlossen ist.

Das andere Teil des Koppelelements ist das mechanische Distanzelement, beispielsweise ein Kniehebelgelenk oder zur Fahrzeugaußenseite bewegbare Teleshopzylindern. Bei einer vorteilhaften Ausführungsform der Erfindung ist das Koppelelement eine Kombination aus einem Luftsack und einer mechanischen Führung, wodurch insbesondere bei einem Seitenaufprall aus unterschiedlichen Winkeln hervorragende Eigenschaften erzielt werden.

Vorzugsweise erstreckt sich das Koppelelement im wesentlichen über die gesamte Höhe der Lehne des Fahrzeugsitzes. In diesem Fall wird eine sichere Kopplung zwischen der eindringenden Struktur und der Lehne des Fahrzeugsitzes sichergestellt, die bei einem Seitenaufprall um ihre Anlenkpunkte geschert werden kann. Auch hier bewegt sich der Fahrzeuginsasse zusammen mit der Lehne und weg von der eindringenden Struktur.

Nach einer weiteren Ausbildung der Erfindung sind mehrere Koppelelemente vorgesehen, die über ein Verbindungselement, beispielsweise eine gemeinsame Koppelplatte, miteinander verbunden sind.

Vorzugsweise ist das Koppelelement in den Fahrzeugsitz eingebaut, da in diesem Fall eine sichere Funktionsweise auch dann gewährleistet ist, wenn sich der Fahrzeugsitz in unterschiedlichen Sitzpositionen befindet. Hierbei ist es besonders bevorzugt, daß das Koppelelement in die Rükkenlehne des Fahrzeugsitzes eingebaut ist. Hierdurch wird einerseits erreicht, daß bei unterschiedlichen Sitz- bzw. Liegepositionen ein einwandfreies Ankoppeln an die eindringende Struktur erfolgen kann. Andererseits wird die Energie von der eindringenden Struktur überwiegend auf das relativ leicht verformbare Lehnenteil des Fahrzeugsitzes übertragen und nicht auf das Sitzelement des Fahrzeugsitzes, das in der Fahrzeugwanne relativ fest verankert und von dieser geschützt ist. Somit wird der Fahrzeuginsasse, insbesondere im Bereich des Torsos zusammen mit der Rükkenlehne des Fahrzeugsitzes in Richtung Fahrzeugmitte verschoben, wodurch die Verletzungsgefahr deutlich herabgesetzt ist.

Bei einer alternativen Ausführungsform der Erfindung kann das Koppelelement in das Fahrzeug eingebaut sein. Eine derartige Variante ist bei Fahrzeugen vorteilhaft, bei denen eine Relativverschiebung zwischen Fahrzeugsitz und Fahrzeug nicht möglich ist, beispielsweise bei Kleinbussen, Vans oder dergleichen.

Das Koppelelement kann so dimensioniert sein, daß es nach seiner Aktivierung, das heißt nach seiner Nachaußenbewegung, den normalerweise zwischen Fahrzeugsitz und Innenwand vorhandenen Raum zumindest entlang eines Teilbereiches ausfüllt. Besonders vorteilhaft ist es jedoch, wenn das Koppelelement so dimensioniert ist, daß es bei seiner Aktivierung einen Weg zurücklegt, der größer ist als der ursprüngliche Abstand zwischen Fahrzeugsitz und Innenwand des Fahrzeuges. Hierdurch erfolgt zusätzlich ein aktives Wegbewegen des Fahrzeugsitzes von der eindringenden Struktur, was die Verletzungsgefahr des Fahrzeuginsassen noch weiter herabsetzt.

Das erfindungsgemäße Koppelelement kann zusätzlich einen herkömmlichen Seitenairbag oder andere bekannte Seitenaufprall-Schutzsysteme aufweisen. Besonders vorteilhaft ist es, wenn die Sicherheitsvorrichtung mit einem Gurtstraffer versehen bzw. gekoppelt ist, da in diesem Fall der Fahrzeuginsasse bestmöglich an den Fahrzeugsitz bzw. an die Rückenlehne des Fahrzeugsitzes gekoppelt und somit von der eindringenden Struktur weggeschoben wird.

Nachfolgend wird die vorliegende Erfindung rein beispielhaft anhand verschiedener Ausführungsformen und unter Bezugnahme auf die beigefügten Zeichnungen beschrieben.

Es zeigen:
- Fig. 1: eine Teilquerschnittsansicht eines Kraftfahrzeuges mit einer Sicherheitsvorrichtung gemäß der Erfindung;
- Fig. 2: eine teilweise geschnittene Ansicht eines alternativen Koppelelementes;
- Fig. 3: eine teilweise geschnittene Ansicht einer weiteren Ausführungsform eines Koppelelementes mit mechanischer Führung;

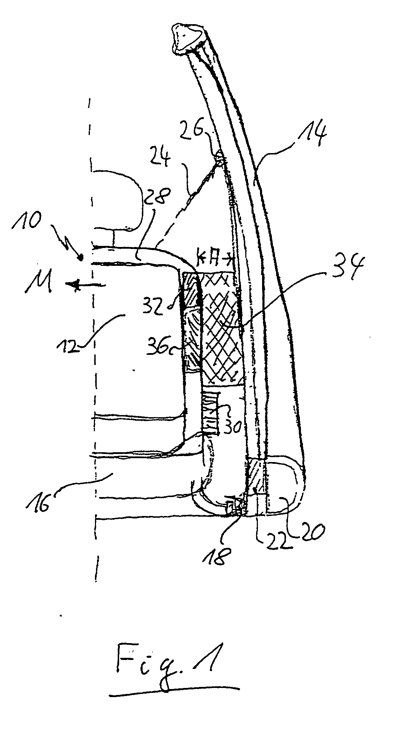

Fig. 1 zeigt ausschnittsweise den Bereich eines Kraftfahrzeuges in dem ein vorderer Fahrzeugsitz 10 befestigt ist. Der Fahrzeugsitz 10 befindet sich mit seiner Rückenlehne 12 im Bereich der B-Säule 14 des Fahrzeuges. Das Sitzelement 16 des Fahrzeugsitzes 10 ist in einer Laufschiene 18 am Fahrzeugboden verschiebbar befestigt.

Im Bereich des Schwellers 20 des Kraftfahrzeuges befindet sich ein Gurtaufroller 22, dessen Sicherheitsgurt 24 um eine Umlenkrolle 26 geführt ist, die an der B-Säule 14 befestigt ist. Das Sicherheitsgurtsystem ist dabei mit einem Gurtstraffer versehen, der nicht nur im Falle eines Aufpralls in Fahrtrichtung sondern insbesondere im Falle eines Seitenaufpralls aktiviert wird.

In den Lehnenrahmen 28 der Rückenlehne 12 des Fahrzeugsitzes 10, der über eine Lehnenverstellung 30 in der Neigung variiert werden kann, ist ein Koppelelement 32 eingebaut, das im Seitenbereich der Rückenlehne 12, das heißt an dessen äußerer Stirnseite, angeordnet ist, und das sich bei einem Seitenaufprall in Richtung der Fahrzeugaußenseite bewegt, um eine frühzeitige Kopplung zwischen einer eindringenden Struktur und dem Fahrzeugsitz 10 zu schaffen. Bei dem dargestellten Ausführungsbeispiel ist das Koppelelement 32 mit einem expandierbaren Luftsack 34 versehen, der auf bekannte Weise von einem Gasgenerator gefüllt wird. Der Luftsack 34 erstreckt sich im wesentlich über die gesamte Höhe der Rückenlehne 12 des Fahrzeugsitzes und füllt nach seiner Aktivierung, das heißt nach seiner Expansion, den Zwischenraum zwischen der Rückenlehne 12 des Fahrzeugsitzes 10 und der Innenwand des Fahrzeuges.

Unterhalb des Koppelelementes 32 ist in den Lehnenrahmen 28 des Fahrzeugsitzes 10 ein herkömmlicher Seitenairbag eingebaut, der - im Gegensatz zu dem Koppelelement 32 - den Fahrzeuginsassen vor einem harten Aufprall an der Fahrzeuginnenwand schützt. Demgegenüber dient das Koppelelement 32 dazu, eine möglichst frühzeitige Kopplung zwischen einer eindringenden Struktur und dem Fahrzeugsitz 10, insbesondere der Rückenlehne 12 zu schaffen, so daß die eindringende Struktur nicht erst nach Durchlaufen des Abstandes A auf den Fahrzeugsitz Kraft überträgt. Vielmehr wird erfindungsgemäß der Fahrzeugsitz und insbesondere die Rückenlehne von der eindringenden Struktur in Richtung der Fahrzeugmitte wegbewegt, wodurch auch der durch den Gurtstraffer mit dem Sitz bzw. der Rückenlehne gekoppelte Insasse aus dem Gefahrenbereich der eindringenden Struktur in Richtung des Pfeiles M wegbewegt wird.

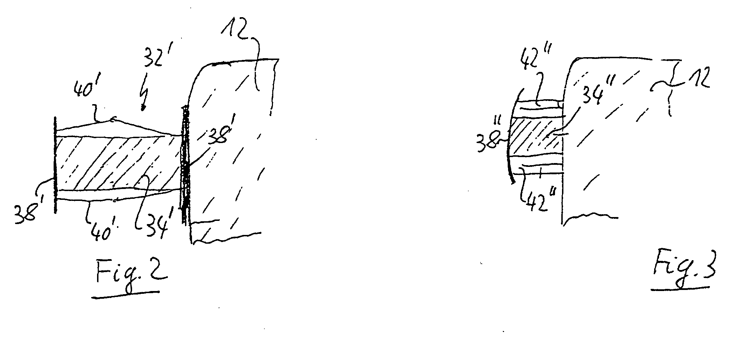

Fig. 2 zeigt eine alternative Ausführungsform eines Koppelelementes, das an einer Rückenlehne 12 eines Fahrzeugsitzes befestigt ist. Bei dieser Ausführungsform weist das Koppelelement 32' einen Luftsack 34' auf, an dessen beiden Stirnseiten Kontaktplatten 38' befestigt sind. Zusätzlich ist jeweils an der Oberseite und der Unterseite des Luftsacks 34' ein Kniehebelgestänge 40' vorgesehen, das bei vollständig expandiertem Luftsack ein Zusammendrücken der Platten 38' unmöglich macht.

Im Falle eines Seitenaufpralls wird der Luftsack 34' expandiert, bis die beiden Kniehebelgelenke durchgestreckt sind. In diesem Zustand liegt die äußere Kontaktplatte 38' an der Innenseite der Fahrzeugwand an. Die innere Kontaktplatte 38' bleibt an der Rückenlehne 12 des Fahrzeugsitzes montiert. Somit ist ein starrer Abstand zwischen der Rückenlehne 12 und einer eindringenden Struktur hergestellt, so daß die Fahrzeuglehne 12 von der eindringenden Struktur in Richtung der Fahrzeugmitte bewegt wird.

Fig. 3 zeigt eine weitere Ausführungsform eines Koppelelementes, das an einem Fahrzeugsitz 12 befestigt ist. Bei dieser Ausführungsform ist ein Luftsack 34" vorgesehen, an dessen Vorderseite eine leicht konvex gekrümmte Kontaktplatte 38" angeordnet ist. Zur Führung der Anordnung sind eine obere und eine untere Teleskopführung 42" vorgesehen.

Ein Luftsack für das erfindungsgemäße Koppelelement kann im wesentlichen eine quadratische Struktur aufweisen und aus zwei im wesentlichen U-förmigen Zuschnitten nach Art eines Tennisballes gefertigt sein. Alternativ kann der Luftsack zylindrisch oder hohlzylindrisch ausgebildet sein, beispielsweise um den Durchtritt von Stellvorrichtungen zu ermöglichen. Alternativ sind auch pyramidenförmige Airbaggestaltungen möglich. Schließlich kann es vorteilhaft sein, mehrere Luftsäcke in einer Rückenlehne zu integrieren und diese Luftsäcke durch ein Verkleidungs- oder Blendelement an der Außenseite miteinander zu verbinden. In diesem Falle kann das Verkleidungselement gleichzeitig als Kraftübertragungsplatte dienen.

### Bezugszeichenliste

- 10: Fahrzeugsitz
- 12: Rückenlehne
- 14: B-Säule
- 16: Sitzelement
- 18: Laufschiene
- 20: Schweller
- 22: Gurtaufroller
- 24: Sicherheitsgurt
- 26: Umlenkrolle
- 28: Lehnenrahmen
- 30: Lehnenverstellung
- 32, 32': Koppelelement
- 34, 34', 34": Luftsack
- 36,: Seitenairbag
- 38', 32": Kontaktplatte
- 40': Kniehebelgelenk
- 42": Teleskopführung

## Patentansprüche

1. Sicherheitsvorrichtung für ein Kraftfahrzeug, bestehend aus zumindest einem Koppelelement (32, 32'), das im Seitenbereich eines Fahrzeugsitzes (10) vorgesehen ist und das bei einem Seitenaufprall in Richtung der Fahrzeugaußenseite bewegbar ist, um eine frühzeitige Kopplung zwischen einer eindringenden Struktur und dem Fahrzeugsitz (10) zu schaffen, **dadurch gekennzeichnet dass** das Koppelelement ein mechanisches Distanzelement (40') ist und einen Luftsack (34') aufweist oder eine mechanische Führung (42") ist und einen Luftsack (34") aufweist.

2. Sicherheitsvorrichtung nach zumindest einem der vorstehenden Ansprüche, **dadurch gekennzeichnet, dass** sich das Koppelelement (34, 34") im wesentlichen über die gesamte Höhe der Rückenlehne (12) des Fahrzeugsitzes (10) erstreckt.

3. Sicherheitsvorrichtung nach zumindest einem der vorstehenden Ansprüche, **dadurch gekennzeichnet, dass** mehrere Koppelelemente vorgesehen sind, die über ein Verbindungselement miteinander verbunden sind.

4. Sicherheitsvorrichtung nach zumindest einem der vorstehenden Ansprüche, **dadurch gekennzeichnet, dass** das Koppelelement (32, 34) in den Fahrzeugsitz (10), vorzugsweise in dessen Rückenlehne (12) eingebaut ist.

5. Sicherheitsvorrichtung nach zumindest einem der vorstehenden Ansprüche 1 bis 3, **dadurch gekennzeichnet, dass** das Koppelelement in das Fahrzeug eingebaut ist.

6. Sicherheitsvorrichtung nach zumindest einem der vorstehenden Ansprüche, **dadurch gekennzeichnet, dass** das Koppelelement (32, 34) so dimensioniert ist, dass es nach seiner Aktivierung den Raum zwischen Fahrzeugsitz (10) und Innenwand des Fahrzeugs zumindest entlang eines Teilbereiches ausfüllt.

7. Sicherheitsvorrichtung nach zumindest einem der vorstehenden Ansprüche, **dadurch gekennzeichnet, dass** das Koppelelement so dimensioniert ist, dass es bei seiner Aktivierung einen Weg zurücklegt, der größer ist als der Abstand zwischen Fahrzeugsitz und Innenwand des Fahrzeuges.

8. Sicherheitsvorrichtung nach zumindest einem der vorstehenden Ansprüche, **dadurch gekennzeichnet, dass** diese zusätzlich einen Seitenairbag (36) aufweist.

9. Sicherheitsvorrichtung nach zumindest einem der vorstehenden Ansprüche, **dadurch gekennzeichnet, dass** diese einen Gurtstraffer aufweist oder mit einem Gurtstraffergekoppelt ist.

## Claims

1. Safety device for a motor vehicle, comprising at least one coupling element (32, 32') which is provided in the side region of a vehicle seat (10) and which can be moved in the direction of the outside of the vehicle during a side impact in order to provide an early coupling between a penetrating structure and the vehicle seat (10), **characterized in that** the coupling element is a mechanical spacer element (40') and has an airbag (34'), or is a mechanical guide (42'') and has an airbag (34'').

2. Safety device according to at least one of the preceding claims, **characterized in that** the coupling element (34, 34'') extends essentially over the entire height of the backrest (12) of the vehicle seat (10).

3. Safety device according to at least one of the preceding claims, **characterized in that** a plurality of coupling elements which are connected to one another via a connecting element are provided.

4. Safety device according to at least one of the preceding claims, **characterized in that** the coupling element (32, 34) is installed in the vehicle seat (10), preferably in the backrest (12) thereof.

5. Safety device according to at least one of the preceding Claims 1 to 3, **characterized in that** the coupling element is installed in the vehicle.

6. Safety device according to at least one of the preceding claims, **characterized in that** the coupling element (32, 34) is dimensioned in such a manner that, after its activation, it fills the space between the vehicle seat (10) and inner wall of the vehicle at least along a subregion.

7. Safety device according to at least one of the preceding claims, **characterized in that** the coupling element is dimensioned in such a manner that, when it is activated, it covers a distance which is greater than the distance between the vehicle seat and inner wall of the vehicle.

8. Safety device according to at least one of the preceding claims, **characterized in that** it additionally has a side airbag (36).

9. Safety device according to at least one of the preceding claims, **characterized in that** it has a belt tightener or is coupled to a belt tightener.

## Revendications

1. Dispositif de sécurité pour un véhicule automobile, constitué par au moins un élément de couplage (32, 32') qui est prévu dans la partie latérale d'un siège de véhicule (10) et qui, lors d'un choc latéral est déplaçable en direction du côté extérieur du véhicule, de manière à créer un couplage précoce entre une structure pénétrante et le siège (10) du véhicule, **caractérisé en ce que** l'élément de couplage est une entretoise mécanique (40') et comporte un coussin gonflable (34') ou est un guide mécanique (42") et comporte un coussin gonflable (34").

2. Dispositif de sécurité selon au moins l'une des revendications précédentes, **caractérisé en ce que** l'élément de couplage (34,34") s'étend essentiellement sur toute la hauteur du dossier (12) du siège (10) du véhicule.

3. Dispositif de sécurité selon au moins l'une des revendications précédentes, **caractérisé en ce qu'**il est prévu plusieurs éléments de couplage, qui sont reliés entre eux par l'intermédiaire d'un élément de liaison.

4. Dispositif de sécurité selon au moins l'une des revendications précédentes, **caractérisé en ce que** l'élément de couplage (32,34) est monté dans le siège (10) du véhicule, de préférence dans son dossier (12).

5. Dispositif de sécurité selon au moins l'une des revendications précédentes 1 à 3, **caractérisé en ce que** l'élément de couplage est monté dans le véhicule.

6. Dispositif de sécurité selon au moins l'une des revendications précédentes, **caractérisé en ce que** l'élément de couplage (32,34) est dimensionné de telle sorte qu'après son activation, il remplit l'espace présent entre le siège (10) du véhicule et la paroi intérieure du véhicule au moins le long d'une zone partielle.

7. Dispositif de sécurité selon au moins l'une des revendications précédentes, **caractérisé en ce que** l'élément de couplage est dimensionné de telle sorte que lors de son activation, il parcourt un trajet qui est supérieure à la distance entre le siège du véhicule et la paroi intérieure du véhicule.

8. Dispositif de sécurité selon au moins l'une des revendications précédentes, **caractérisé en ce que** ce dispositif comporte au moins un coussin gonflable latéral (36).

9. Dispositif de sécurité selon au moins l'une des revendications précédentes, **caractérisé en ce que** ce dispositif comporte un tendeur de ceinture ou est couplé à un tendeur de ceinture.
